# EUROPÄISCHE PATENTANMELDUNG

(11) **EP 2 621 055 A1**
(43) Veröffentlichungstag der Anmeldung: **31.07.2013**
(21) Anmeldenummer: 12152790.7
(22) Anmeldetag: 27.01.2012
(51) Int. Cl.: H02K 1/27, H02K 41/03

(54) **Elektrische Maschine und Läufer für eine elektrische Maschine**

(71) Anmelder: Siemens Aktiengesellschaft, 80333 München (DE)
(72) Erfinder: Fick, Michael, 97656 Sondernau (DE); Vollmer, Rolf, 36129 Gersfeld (DE)

(57) **Zusammenfassung**

Eine Aufgabe der vorliegenden Erfindung besteht darin, eine kostengünstig herstellbare elektrische Maschine (36) bereitzustellen, welche den bisherigen, auf Seltenerd-Magneten basierenden und daher kostenintensiven Modellen in der Leistungsfähigkeit nicht nachsteht. Der erfindungsgemäße Läufer (36) weist zumindest einen Permanentmagneten (48,50,52) auf, dessen Magnetfeld sich teilweise außerhalb des Läufers (36) erstreckt, wobei das Magnetfeld hierzu durch eine Durchtrittsfläche (42,46) des Läufers (36) entlang einer Durchtrittsrichtung hindurchtritt, wobei die Durchtrittsfläche (42) größtenteils durch eine Feldleiteinrichtung (68,70) gebildet ist, welche zumindest teilweise aus einem weichmagnetischen Material gebildet ist und welche mit einem Pol (N,S) des Permanentmagneten (48,50,52) eine gemeinsame Berührungsfläche (60 bis 66) aufweist, die größer als die Durchtrittsfläche (42,46) ist, und welche hierdurch an der Durchtrittsfläche (42,46) eine magnetische Flussdichte aufweist, die größer als eine magnetische Flussdichte an der Berührungsfläche (60 bis 66) ist. Die erfindungsgemäße elektrische Maschine (32) weist einen erfindungsgemäßen Läufer (36) auf.

## Beschreibung

Die Erfindung betrifft einen Läufer für eine elektrische Maschine, welcher zumindest einen Permanentmagneten aufweist, dessen Feld sich teilweise außerhalb des Läufers erstreckt, sodass mittels eines Stators einer elektrischen Maschine über dieses äußere Feld eine magnetische Antriebskraft auf den Läufer übertragen werden kann. Die Erfindung betrifft auch eine entsprechende elektrische Maschine. Bevorzugt handelt es sich bei der elektrischen Maschine dabei um einen Linearmotor.

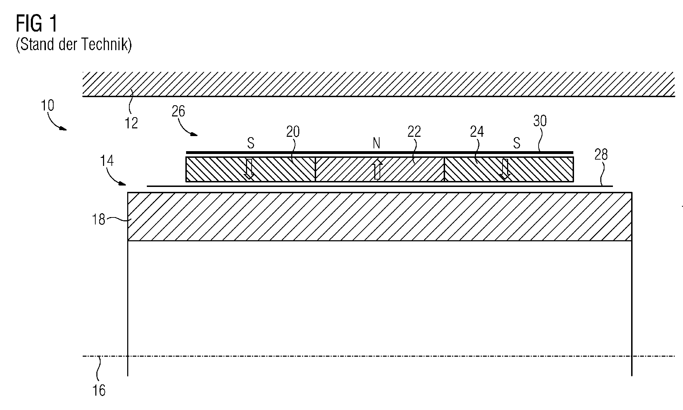

Ein typischer Aufbau eines zylindrischen Linearmotors ist im Folgenden anhand von FIG 1 näher erläutert. In FIG 1 ist eine Schnittansicht eines Linearmotors 10 gezeigt, bei welchem sich in einem Stator 12 ein zylinderförmiger Läufer 14 befindet. Der Läufer 14 weist eine rotationssymmetrische Form mit einer Zylinderachse 16 als Symmetrieachse auf. Bei dem Läufer 14 ist auf einer Hohlwelle 18 eine Folge von Permanentmagneten 20, 22, 24 mit wechselnder Magnetisierung befestigt. Die Permanentmagneten 20, 22, 24 sind dabei in radialer Richtung magnetisiert, sodass entlang der Zylinderachse 16 an einem Außenumfang 26 des Läufers 14 abwechselnd ein Südpol (S) und ein Nordpol (N) ausgebildet ist. Die Permanentmagneten 20 bis 24 können durch eine Klebeschicht 28 auf der Hohlwelle 18 gehalten sein. Mittels einer Bandage 30 kann eine zusätzliche Fixierung erreicht werden. Die Hohlwelle 18 besteht in der Regel aus einem weichmagnetischen Material, sodass sich die Feldlinien der Permanentmagneten 18 bis 24 über die Hohlwelle 18 schließen.

Bei den Permanentmagneten 20 bis 24 muss es sich in der Regel um Seltenerd-Magneten handeln, um an dem Außenumfang 26 eine ausreichend große magnetische Flussdichte zu erhalten. Andernfalls ist es nicht möglich, über dem Stator 12 eine zufriedenstellend große Antriebskraft auf den Läufer 14 zu übertragen. Der beschriebene Aufbau mit Seltenerd-Magneten ist sehr kostenintensiv.

Eine Aufgabe der vorliegenden Erfindung besteht darin, eine kostengünstig herstellbare elektrische Maschine bereitzustellen, welche den bisherigen, auf Seltenerd-Magneten basierenden und daher kostenintensiven Modellen in der Leistungsfähigkeit nicht nachsteht.

Die Aufgabe wird durch einen Läufer gemäß Patentanspruch 1 und eine elektrische Maschine gemäß Patentanspruch 14 gelöst. Vorteilhafte Weiterbildungen des erfindungsgemäßen Läufers sind durch die Unteransprüche gegeben.

Die Erfindung ermöglicht den Einsatz kostengünstiger Ferritmagnete, ohne dass hierdurch die Kraftdichte, die mittels eines Stators an der Oberfläche des Läufers erzeugbar ist, geringer wäre als bei einem Läufer mit Seltenerd-Magneten. Durch die Verwendung von Ferritmagneten oder vergleichbar kostengünstigen Magneten ist es dabei möglich, den Läufer zu geringeren Herstellungskosten bereitzustellen.

Das Problem bei der Verwendung von Ferritmagneten und vergleichbaren Magneten ist hierbei, dass diese an den Oberflächen ihrer Pole eine geringere magnetische Flussdichte aufweisen, als sie mit Seltenerd-Magneten erzielt werden kann. Die Erfindung beruht nun auf der Erkenntnis, dass sich das magnetische Feld eines Permanentmagneten verstärken oder bündeln lässt, indem die Feldlinien des Magnetfelds entsprechend zusammengeführt werden. Dies wird hier mittels einer Feldleiteinrichtung erreicht, die zumindest teilweise aus einem weichmagnetischen Material gebildet ist. Entsprechend weist der erfindungsgemäße Läufer eine solche Feldleiteinrichtung auf, als z.B. einen weichmagnetischen Polring für einen zylindrischen Linearmotor. Die Feldleiteinrichtung berührt einen Pol eines Permanentmagneten des Läufers. Zugleich erstreckt sich ein Teil der Feldleiteinrichtung bis an die Oberfläche des Läufers.

Für die nachfolgende Erläuterung sei angenommen, dass es sich bei dem Pol um den Nordpol des Permanentmagneten handelt. Das Magnetfeld des Permanentmagneten tritt entsprechend an dem Nordpol aus und in die anliegende Feldleiteinrichtung über. Innerhalb der Feldleiteinrichtung wird das Magnetfeld zu der Oberfläche des Läufers geleitet, wo das Magnetfeld durch eine Durchtrittsfläche der Feldleiteinrichtung hindurch wieder austritt und sich als äußeres Magnetfeld außerhalb des Läufers erstreckt.

An der Oberfläche des Läufers im Bereich der Durchtrittsfläche liegt dabei eine magnetische Flussdichte in der Größenordnung der Flussdichte eines Seltenerd-Magneten. Hierbei ist es dann nicht nötig, dass der Permanentmagnet selbst, also etwa ein Ferritmagnet, an seinem Nordpol ebenfalls diese hohe Flussdichte aufweist. Um nun diese Verstärkung des magnetischen Feldes an der Oberfläche des Läufer zu erhalten, ist die Anlagefläche oder gemeinsame Berührungsfläche der Feldleiteinrichtung mit dem Nordpol des Permanentmagneten größer als die äußere Durchtrittsfläche an der Läuferoberfläche. Mit anderen Worten werden die Feldlinien, die über die Berührungsfläche am Nordpol in die Feldleiteinrichtung eintreten in dieser gebündelt, um dann in gebündelter Form durch die Durchtrittsfläche hindurch wieder auszutreten. Hierdurch wird dann in vorteilhafter Weise erreicht, dass an der Durchtrittsfläche eine magnetische Flussdichte gegeben ist, die größer als die magnetische Flussdichte an der Berührungsfläche ist.

Diese Erläuterungen gelten natürlich in der entsprechenden Form auch für den Südpol des Permanentmagneten. Hier kann ebenfalls eine Feldleiteinrichtung der beschriebenen Art vorgesehen sein. An der Durchtrittsfläche dieser Leiteinrichtung tritt das äußere magnetische Feld dann entsprechend nicht aus dem Läufer aus, sondern in diesen hinein. Mit anderen Worten sind die Durchtrittsrichtungen (hinaus und hinein) am Nordpol und Südpol der Oberfläche des Läufers entgegengesetzt. Die an der Oberfläche in den Läufer mit einer hohen magnetischen Flussdichte eintretenden Feldlinien werden dann durch die zweite Feldleiteinrichtung auf die Polfläche des Südpols des Permanentmagneten verteilt, sodass sich wieder eine verringerte Flussdichte am Südpol des Permanentmagneten ergibt.

Natürlich können als Permanentmagneten auch Seltenerd-Magneten verwendet werden, sodass sich gegenüber der herkömmlichen Bauweise sogar ein Läufer mit vergrößerter magnetischer Flussdichte bereitstellen lässt. Der Läufer weist aber zum Erzeugen eines eigenen Magnetfelds insbesondere ausschließlich Permanentmagnete auf, also keine zusätzlichen Elektromagneten z. B. in Form von Spulen.

Da bei dem erfindungsgemäßen Läufer Permanentmagneten verhältnismäßig großen Polflächen verwendet werden, kann es unter Umständen zu einem Platzproblem auf dem Läufer kommen. In diesem Zusammenhang sieht eine Ausführungsform des Läufers vor, eine Magnetisierung des Permanentmagneten quer zur Durchtrittsfläche auszurichten. Mit anderen Worten weist die Magnetisierung an dem Pol des Permanentmagneten nicht nach außen in Richtung des Stators, sondern in eine Richtung quer dazu. Insbesondere kann die Ausrichtung der Magnetisierung bezüglich der Durchtrittsrichtung des Magnetfelds an der Oberfläche einen spitzen Winkel aufweisen, der betragsmäßig größer ist als 45°, bevorzugt größer als 70° ist. Besonders bevorzugt ist es, die Magnetisierung senkrecht zu einem Normalenvektor der Durchtrittsfläche auszurichten, also zumindest in einem Bereich von 80° bis 90°. Dann ist es ohne Platzprobleme möglich, sowohl den Nordpol als auch den Südpol des Permanentmagneten über jeweils eine Feldleiteinrichtung mit entsprechenden Durchtrittsflächen an der Oberfläche des Läufers magnetisch zu koppeln.

Für den Fall, dass der Läufer für einen zylindrischen Linearmotor vorgesehen ist, ist gemäß einer bevorzugten Ausführungsform vorgesehen, dass mehrere, mit gleicher Orientierung magnetisierte Permanentmagneten, also insbesondere Ferritmagneten, ringförmig entlang eines Außenumfangs des Läufers angeordnet sind, wobei die Permanentmagnete axial magnetisiert sind, das heißt die Magnetisierungen in der Weise ausgerichtet sind, dass sie parallel zu einer Zylinderachse der zylindrischen Form des Läufers weisen. Dieser Ring aus Permanentmagneten ist dann bevorzugt zwischen zwei Polringe eingebettet, die aus einem weichmagnetischen Material gebildet sind und jeweils als eine Feldleitrichtung fungieren. Der gesamte Aktivteil des Läufers kann dann aus einer wechselnden Folge aus jeweils einem Ring von Permanentmagneten und einem Polring gebildet sein. Die Polringe können dabei auf einem a-magnetischen Rohr als Trägerteil angeordnet sein und hier beispielsweise durch eine Presspassung oder Klebung gehalten sein. Die Permanentmagneten können dann an den Polringen durch eine Klebung fixiert sein. Das a-magnetische Rohr dient zum einen der Stabilisierung des Läufers und kann zum anderen axiale oder radiale Kräfte aufnehmen, das heißt eine Hohlwelle des Läufers darstellen.

Um zu vermeiden, dass sich ein unerwünscht großer Anteil des Magnetfelds über das Innere des Läufers schließt, weisen die Feldleiteinrichtungen jeweils an einer der Durchtrittsfläche gegenüberliegenden Seite zweckmäßigerweise eine Nut in ihrem weichmagnetischen Material auf. Diese Nut ist dabei zweckmäßigerweise pfeilförmig oder keilförmig in der Weise ausgestaltet, dass sie sich zum Inneren der Feldleiteinrichtung hin verjüngt. In der Nut befindet sich dann ein nicht-magnetisches Material, also etwa Luft. Um durch die Nut nicht die Steifigkeit des Läufers zu beeinträchtigen, kann die Nut auch mit Edelstahl gefüllt sein. Durch Vorsehen der Nut wird das Umleiten der Feldlinien von dem Pol hin zu derjenigen Durchtrittsfläche der Feldleiteinrichtung begünstigt, durch welche das Feld (im Falle eines Nordpols) nach außen hin austritt. Im Falle der beschriebenen Polringe kann es sich um einen umlaufenden Einstich oder eine Ringnut handeln, die an Innenseite der Polringe, welche der Längsachse oder Zylinderachse des Läufers zugewandt ist, ausgebildet ist.

Um zum einen zu verhindern, dass das über die Berührungsfläche von dem Permanentmagneten in die Feldleiteinrichtung eintretende Feld (die Erläuterung geht wieder von einem Nordpol aus) nicht gleich wieder an der gegenüberliegenden Seite aus der Feldleiteinrichtung heraustritt, und um zugleich auch die magnetische Flussdichte an der Durchtrittsfläche noch weiter zu vergrößern, sieht eine vorteilhafte Ausführungsform des erfindungsgemäßen Läufers vor, dass die Feldleiteinrichtung an einer Seite, die der Berührungsfläche gegenüberliegt, zusätzlich den Pol eines weiteren Permanentmagneten berührt. Die Pole der beiden von der Feldleiteinrichtung berührten Permanentmagneten sind dabei magnetisch gleichartig. Es handelt sich also entweder um zwei Nordpole oder um zwei Südpole.

Bevorzugt beträgt bei der Feldleiteinrichtung das Flächenverhältnis von berührter Polfläche, das heißt der Berührungsfläche, zur Durchtrittsfläche zumindest 1,5. Dann ergibt sich an der Oberfläche des Läufers an der Durchtrittsfläche auch bei Verwendung von Ferritmagneten die gewünschte hohe magnetische Flussdichte.

Im Falle des zylindrischen Linearmotors bedeutet dies folgendes. Die Permanentmagneten sind hier in Umlaufrichtung um die Zylinderachse des Läufers in Ringen (oder zumindest Ringsegmenten) angeordnet und zwar weist jeder Ring eine einheitliche Magnetisierungsrichtung (bevorzugt parallel zur Zylinderachse) auf. Zwei in axialer Richtung hintereinander angeordnete Ringe weisen dabei eine entgegengesetzte Magnetisierung auf. Die Magnetbreite der Ringe in radialer Richtung muss dann gemäß der obigen Bedingung im Verhältnis zum Abstand der Magnetringe unterschiedlicher Polung, das heißt der Polteilung in axialer Richtung, 1,5 zu 1 betragen. Selbiges trifft auch im Falle von Ringsegmenten zu.

Die Feldleiteinrichtung eignet sich zugleich auch dazu, einen Verlauf des äußeren Magnetfelds zu erzeugen, der einem idealer Weise sinusförmigen Verlauf sehr gut entspricht. Hierzu ist insbesondere ein Hinterschnitt in der Feldleiteinrichtung vorgesehen und der Permanentmagnet in dem Hinterschnitt gehalten. Insbesondere bei zylindrisch geformten Linearmotoren lässt sich so ein Betrag einer Abweichung von dem sinusförmigen Verlauf unter einen vorbestimmten Wert reduzieren.

Die Tatsache, dass sich bei dem erfindungsgemäßen Läufer die Permanentmagnete aufgrund der vergrößerten Polflächen nun tiefer in das Innere des Läufers erstrecken, kann auch in vorteilhafter Weise dazu genutzt werden, Führungsstäbe für eine lineare Lagerung des Läufers im Aktivteil des Läufers anzuordnen. Hierzu können die Feldleiteinrichtungen zwischen den einzelnen Permanentmagneten, also etwa die Polringe eines zylindrischen Linearmotors, eine Segmentierung für einen Führungsstab aufweisen. Die im Verhältnis zu herkömmlichen Linearmotoren veränderte Bauweise des erfindungsgemäßen Läufers hindert aber nicht daran, auch im Inneren des Läufers beispielsweise einen Lagerschild anzuordnen, um den Läufer linear beweglich zu lagern.

Im Folgenden wird die Erfindung noch einmal anhand von Ausführungsbeispielen konkreter erläutert. Dazu zeigt:
- FIG 1: eine schematische Darstellung eines zylindrischen Linearmotors gemäß dem Stand der Technik in einer Schnittansicht,
- FIG 2: eine schematische Darstellung eines Linearmotors gemäß einer Ausführungsform der erfindungsgemäßen elektrischen Maschine in einer Schnittansicht,
- FIG 3: eine schematische Darstellung eines Läufers eines zylindrischen Linearmotors gemäß einer weiteren Ausführungsform der erfindungsgemäßen elektrischen Maschine in perspektivischer Ansicht,
- FIG 4: eine schematische Darstellung einer Schnittansicht des Läufers von FIG 3,
- FIG 5: einen schematischen Verlauf von Magnetisierungen von Ferritmagneten des Läufers von FIG 3, und
- FIG 6: eine schematische Darstellung eines Linearlagers des Läufers von FIG 3 in einer perspektivischen Schnittansicht.

Die Beispiele stellen bevorzugte Ausführungsformen der Erfindung dar.

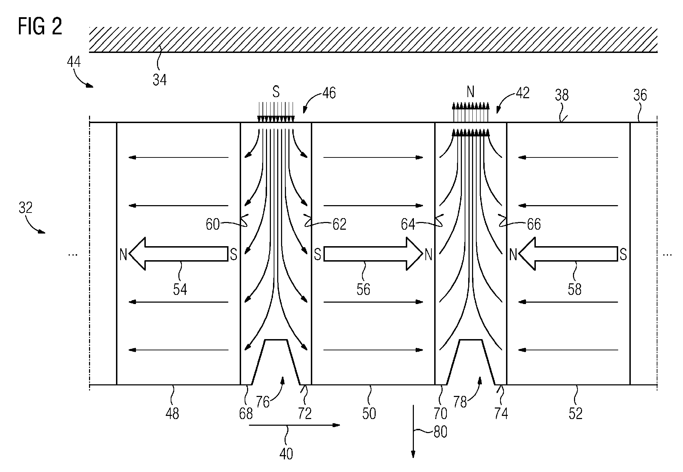

In FIG 2 ist ein zylindrischer Linearmotor 32 gezeigt, bei welchem in ähnlicher Weise wie bei dem in FIG 1 gezeigten Linearmotor 10 in einem Stator 34 ein zylindrisch geformter Läufer 36 angeordnet ist. In FIG 2 sind dabei nur die für die Erläuterung der Erfindung wesentlichen Komponenten des Linearmotors 32 gezeigt.

An einer dem Stator 34 zugewandten Oberfläche 38 des Läufers 36 sind entlang einer Längserstreckungsrichtung 40 des Läufers 36 abwechselnd ein magnetischer Nordpol N und ein magnetischer Südpol S ausgebildet, von denen in FIG 2 lediglich ein Nordpol und zwei Südpole dargestellt sind. An dem magnetischen Nordpol N tritt aus dem Läufer 36 ein magnetisches Feld aus einer Durchtrittsfläche 42 aus und bildet so ein äußeres Magnetfeld, welches sich in einem Luftspalt 44 zwischen dem Läufer 36 und dem Stator 34 erstreckt. Das Magnetfeld tritt durch eine weitere Durchtrittsfläche 46 der Oberfläche 38 des Läufers 36 wieder in den Läufer 36 ein.

An den Durchtrittsflächen 42, 46 weist das Magnetfeld eine magnetische Flussdichte auf, die vom Betrage her mit der Flussdichte der Nord- und Südpole des Läufers 10 aus FIG 1 vergleichbar ist. Der Läufer 36 weist dennoch keine Seltenerd-Magneten, sondern Permanentmagneten 48, 50, 52 auf, die beispielsweise Ferritmagneten sein können. Jeweilige Magnetisierungen 54, 56, 58 der Permanentmagneten 48 bis 52, deren Orientierung in FIG 2 jeweils durch einen Pfeil dargestellt ist, sind parallel zu den Durchtrittsflächen 42, 46, also senkrecht zu den Normalenvektoren der Durchtrittsflächen 42, 46 ausgerichtet. Polflächen 60, 62, 64, 66 der einzelnen Nord- und Südpole (in FIG 2 und in den folgenden Figuren mit N und S dargestellt) erstrecken sich senkrecht zu den Durchtrittsflächen 42, 46. Zwischen den Polflächen 60 und 62 beziehungsweise den Polflächen 64 und 66 befindet sich jeweils ein magnetisches Feldleitelement 68, 70 aus einem weichmagnetischen Material, beispielsweise einem ferromagnetischen Material, wie etwa Weicheisen. An das Feldleitelement 68 grenzen die Polflächen 60, 62 der Südpole S der Permanentmagneten 48 und 50 an. Die Polflächen 60, 62 berühren dabei mit ihrer gesamten Fläche das Feldleitelement 68. Entsprechend berührt das Feldleitelement 70 die Polflächen 64, 66 zweier Nordpole N, nämlich der Nordpole der Permanentmagneten 50 und 52. Auch das Feldleitelement 70 berührt die Polflächen 64, 66 vollständig. Die Polflächen 60 bis 66 stellen somit Berührungsflächen dar, welche die Permanentmagneten 48 bis 52 mit den entsprechenden Feldleitelementen 68, 70 gemeinsam haben. An den Polflächen 60 bis 66 weisen die Feldleitelemente 68, 70 eine geringere magnetische Flussdichte auf als an den Durchtrittsflächen 42, 46. Das Feldleitelement 70 bündelt die aus den Polflächen 64, 66 austretenden Feldlinien, die zu der Durchtrittsfläche 42 führen. Entsprechend verteilt das Feldleitelement 68 die durch die Durchtrittsfläche 48 in das Feldleitelement 68 eintretenden Feldlinien auf die Polflächen 60, 62. Hierdurch ist es ermöglicht, auch mit im Vergleich zu Seltenerd-Magneten schwächeren Ferritmagneten an den Durchtrittsflächen 42, 46 dennoch magnetische Pole S, N in dem Luftspalt 44 zu erzeugen, die es ermöglichen, mit dem Stator 34 eine ähnlich große Kraftdichte an der Oberfläche 38 zu erzeugen, wie bei dem Linearmotor 10 von FIG 1. Der Stator 34 muss dabei nicht in besonderer Weise an den Läufer 36 angepasst werden. Es kann sich somit beispielsweise um den Stator 12 von FIG 1 handeln.

An den den Durchtrittsflächen 42, 46 gegenüberliegenden Seiten 72, 74 der Feldleitelemente 68, 70 weisen die Feldleitelemente 68, 70 in dem weichmagnetischen Material jeweils eine Einkerbung oder Nut 76, 78 auf. In dem in FIG 2 gezeigten Beispiel befindet sich in den Nuten 76, 78 Luft. Durch die Nuten wird der Feldverlauf in den Feldleitelementen 68, 70 dahingehend begünstigt, dass nur ein geringer Anteil des durch die Permanentmagneten 48 bis 52 erzeugten Magnetfelds in eine Richtung 80 zum Inneren des Läufers 36 hin aus den Feldleitelementen 68, 70 austritt.

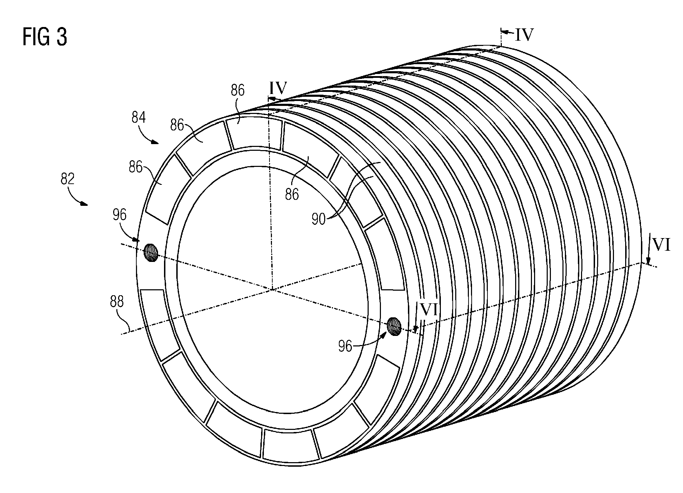

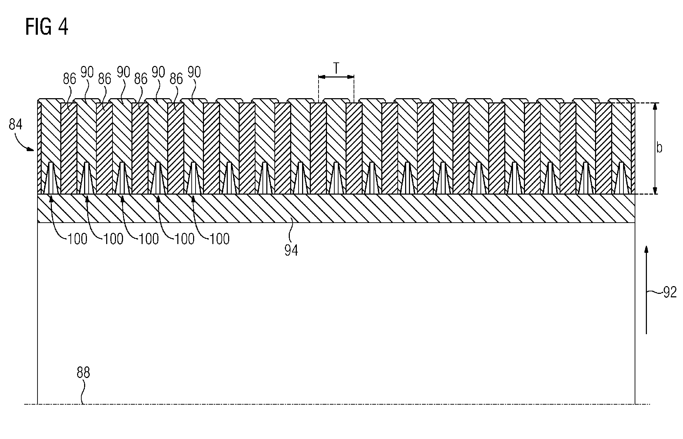

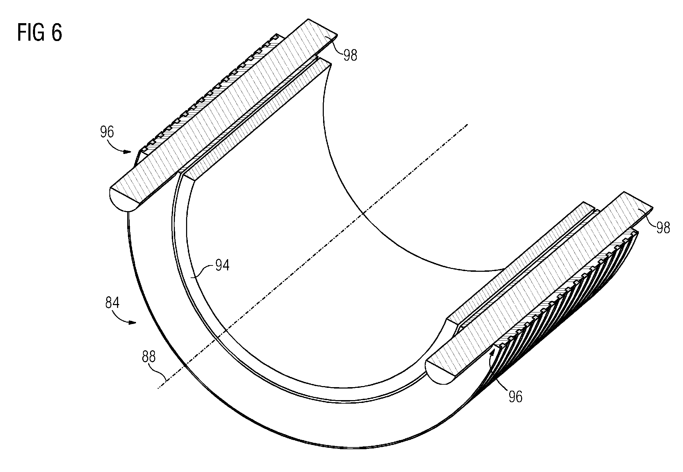

Im Folgenden ist anhand von FIG 3 bis FIG 6 ein zylindrischer Linearmotor 82 beschrieben, bei dem ein Läufer-Aktivteil oder kurz Läufer 84 aus ringförmig angeordneten Ferritmagneten 86 gebildet ist, von denen in den Figuren der Übersichtlichkeit halber jeweils nur einige mit einem Bezugszeichen versehen sind. In FIG 3 sind die Verläufe der Schnitte, welche in FIG 4 beziehungsweise in FIG 6 gezeigt sind, durch gestrichelte Linien angedeutet.

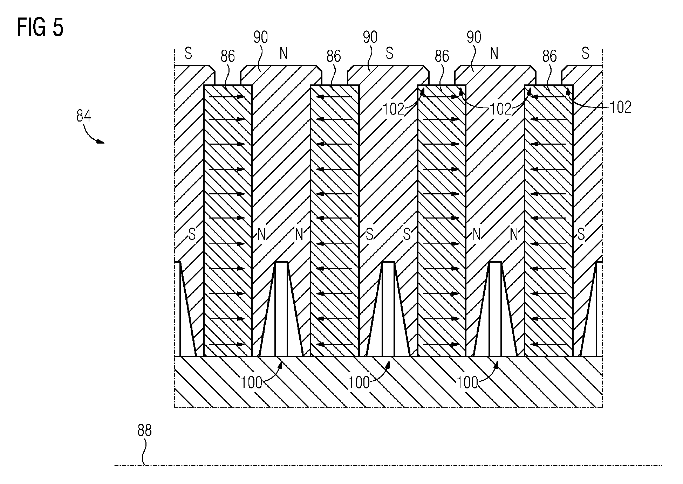

Eine jeweilige Magnetisierung 88 der einzelnen Ferritmagnete 86 ist parallel zu einer Rotations- oder Zylinderachse 88 des Läufers 86 ausgerichtet. Die Orientierung der Magnetisierungen der einzelnen Ferritmagnete 86 entlang der Zylinderachse 88 ist in FIG 5 durch Pfeile angedeutet. Für eine detailliertere Beschreibung des sich ergebenden Verlaufs des Magnetfelds in den Polringen 90, wie sie aus der in FIG 5 gezeigten Magnetisierung der Ferritmagnete 86 folgt, sei auf FIG 2 und die dazugehörigen, obigen Erläuterungen verwiesen, die entsprechend auch auf die Darstellung von FIG 5 zutreffen.

Zwischen den einzelnen Ringen aus Ferritmagneten 86 sind Polringe 90 angeordnet, von denen in den Figuren der Übersichtlichkeit halber wieder jeweils nur einige mit Bezugszeichen versehen sind. Das Verhältnis der in radialer Richtung 92 senkrecht zur Zylinderachse 88 bemessenen Magnetbreite b zu einer Polteilung T beträgt mindestens 1,5 zu 1.

Die Polringe 90 und die Ferritmagnete 86 sind durch eine Klebung an ihren Anlageflächen miteinander fixiert. Ein a-magnetisches Rohr 94 dient zum Aufnehmen der radialen und axialen Kräfte und zur Stabilisierung des Aktivteils des Läufers 84. Außerdem dient das Rohr als Montagehilfe. Der Sitz der Polringe 90 auf dem Rohr 94 kann entweder durch eine Presspassung oder eine Klebung hergestellt werden.

Weiterhin ist es möglich, die Polringe 90 zu segmentieren, das heißt Aussparungen vorzusehen, in welche entlang des Umfangs kein Ferritmagnet angeordnet ist. Im Bereich der so geschaffenen Segmentierungen 96 der einzelnen Ringe 90 können dann Bohrungen vorgesehen sein, durch welche Führungsstäbe 98 für eine lineare Führung des Läufers entlang seiner Zylinderachse 88 gesteckt sein können. Die lineare Führung des Läufers kann auch innerhalb des a-magnetischen Rohres mit einem oder mehreren Lagerschilden erfolgen. Zweckmäßig ist es hierbei, zwei Lagerschilde vorzusehen.

Die Polringe weisen an ihren zum Inneren des Läufers 84 gewandten Seiten jeweils einen radialen Einstich 100 auf. Dieser dient der Führung des magnetischen Flusses innerhalb der Polringe und weist idealer Weise eine pfeilförmige Kontur auf. Ein Schnitt eines Polrings in radialer Richtung weist damit insgesamt eine zahnförmige Kontur auf. In den radialen Einstichen 100 kann sich Luft befinden. Es kann aber auch vorgesehen sein, in die Einstiche 100 jeweils einen Ring aus Edelstahl einzulegen und die Einstiche so zu füllen.

Die Polringe können jeweils an ihren den Ferritmagneten 86 zugewandten Seiten einen Hinterschnitt 102 aufweisen, welcher der Erzeugung eines möglichst sinusförmigen Magnetfelds dient.

Insgesamt ist durch die Beispiele gezeigt, wie durch den Einsatz kostengünstiger Ferritmagnete die Herstellungskosten für einen Läufer eines zylindrischen Linearmotors gesenkt werden können und hierbei die Kraftdichte des zylindrischen Linearmotors dennoch beibehalten werden kann. Ein mit Ferritmagneten aufgebauter Läufer kann somit einen mit Seltenerd-Magneten bestückten Läufer ersetzen und Kostenvorteile bieten.

## Patentansprüche

1. Läufer (36,84) für eine elektrische Maschine (32,82), welcher zumindest einen Permanentmagneten (48,50,52,86) aufweist, dessen Magnetfeld sich teilweise außerhalb des Läufers (36,84) erstreckt, wobei das Magnetfeld hierzu durch eine Durchtrittsfläche (42,46) an einer Oberfläche des Läufers (36,84) entlang einer vorbestimmten Durchtrittsrichtung hindurchtritt, **dadurch gekennzeichnet , dass** die Durchtrittsfläche (42,46) zumindest größtenteils durch eine Feldleiteinrichtung (68,70,90) gebildet ist, welche zumindest teilweise aus einem weichmagnetischen Material gebildet ist und welche mit einem Pol (N, S) des Permanentmagneten (48,50,52,86) eine gemeinsame Berührungsfläche (60 bis 66) aufweist, die größer als die Durchtrittsfläche (42, 46) ist, und welche hierdurch an der Durchtrittsfläche (42, 46) eine magnetische Flussdichte aufweist, die größer als eine magnetische Flussdichte an der Berührungsfläche (60 bis 66) ist.

2. Läufer (36,84) nach Anspruch 1, wobei eine Magnetisierung (54 bis 58) des Permanentmagneten (48,50,52,86) an dem Pol quer zu der Durchtrittsfläche (42,46) ausgerichtet ist und hierbei bezüglich eines Normalenvektors der Durchtrittsfläche insbesondere einen spitzen Winkel aufweist, der betragsmäßig größer als 45°, bevorzugt größer als 70°, ist und hierbei ganz bevorzugt in einem Bereich von 80° bis 90° liegt.

3. Läufer (36,84) nach Anspruch 1 oder 2, wobei die Feldleiteinrichtung (68,70,90) an einer der Durchtrittsfläche (42, 46) gegenüberliegenden Seite (72,74) eine Nut (76,78,100) in dem weichmagnetischen Material aufweist, welche mit einem nicht-magnetischen Material, bevorzugt mit Luft oder mit Edelstahl, gefüllt ist, und welche hierbei bevorzugt sich keilförmig zum Inneren der Feldleiteinrichtung (68,70,90) hin verjüngend ausgestaltet ist.

4. Läufer (36,84) nach einem der vorhergehenden Ansprüche, wobei die Feldleiteinrichtung (68,70,90) an einer der Berührungsfläche (60 bis 66) gegenüberliegenden Seite (60 bis 66) zusätzlich mit einem Pol (N, S) eines weiteren Permanentmagneten (48,50,52,86) ebenfalls eine gemeinsame Berührungsfläche (60 bis 66) aufweist, wobei die Pole (N,S) der beiden von ihr berührten Permanentmagneten (48, 50,52,86) magnetisch gleichartig (N,N; S,S) sind.

5. Läufer (36,84) nach einem der vorhergehenden Ansprüche, wobei auch der andere Pol (S,N) des Permanentmagneten (48, 50,52,86) über eine weitere Feldleiteinrichtung (68,70, 90) der genannten Art mit einer Durchtrittsfläche (42,46) magnetisch gekoppelt ist, durch welche das Magnetfeld entgegengesetzt zur Durchtrittsrichtung hindurchtritt.

6. Läufer (36,84) nach einem der vorhergehenden Ansprüche, wobei bei der Feldleiteinrichtung (68,70,90) das Flächenverhältnis von Polfläche (60 bis 66) zu Durchtrittsfläche (42, 46) zumindest 1,5 beträgt.

7. Läufer (36,84) nach einem der vorhergehenden Ansprüche, wobei der zumindest eine Permanentmagnet (48,50,52,86) ein Ferritmagnet ist.

8. Läufer (36,84) nach einem der vorhergehenden Ansprüche, wobei der Läufer für einen zylindrischen Linearmotor (32,82) vorgesehen ist und ringförmig angeordnete Permanentmagneten (48,50,52,86) aufweist, die bezüglich einer durch die zylindrische Form festgelegten Zylinderachse (40,88) axial magnetisiert sind.

9. Läufer (36,84) nach einem der vorhergehenden Ansprüche, wobei der Läufer Polringe (68,70,90) aus einem weichmagnetischen Material aufweist, die bevorzugt auf einem a-magnetischen Rohr (94) als Trägerteil angeordnet sind und hierbei insbesondere an dem Rohr (94) durch eine Presspassung oder eine Klebung befestigt sind.

10. Läufer (36,84) nach einem der vorhergehenden Ansprüche, wobei der Läufer (36,84) für einen zylindrischen Linearmotor vorgesehen ist und ein Verhältnis einer Magnetbreite (b) in radialer Richtung (94) zu einer Polteilung (T) in axialer Richtung (40,88) mindestens 1,5 zu 1 beträgt.

11. Läufer (36,84) nach einem der vorhergehenden Ansprüche, wobei der zumindest eine Permanentmagnet (48,50,52,86) und die Feldleiteinrichtung (68,70,90) an der Berührungsfläche (60 bis 66) miteinander durch eine Klebung verbunden sind.

12. Läufer (84) nach einem der vorhergehenden Ansprüche, wobei die Feldleiteinrichtung (90) einen Hinterschnitt (102) aufweist und hierdurch der Permanentmagnet (86) durch einen Formschluss von der Feldleiteinrichtung (90) in dem Läufer (84) gehalten ist.

13. Läufer (84) nach einem der vorhergehenden Ansprüche, wobei eine Segmentierung (96) für einen Führungsstab (98) in der Feldleiteinrichtung (90) vorgesehen ist oder in einem Inneren des Läufers ein Lagerschild angeordnet ist.

14. Elektrische Maschine (32,82) mit einem Läufer (36,84) nach einem der vorhergehenden Ansprüche, wobei ein Stator (34) der elektrischen Maschine (32,82) dazu ausgebildet ist, über das äußere Magnetfeld des Läufers (36,84) eine magnetische Antriebskraft auf diesen zu übertragen.
